# FASCICULE DE BREVET EUROPEEN

(11) **EP 0 371 832 B1**
(45) Date de publication et mention de la délivrance du brevet: **07.09.1994**
(21) Numéro de dépôt: 89402877.8
(22) Date de dépôt: 18.10.1989
(51) Int. Cl.: C22B 3/00, C01G 15/00

(54) **Recovery of Gallium contained in aqueous solutions**
Extraktion von Gallium aus wässrigen Lösungen
Recovery of Gallium contained in aqueous solutions

(30) Priorité: 25.10.1988 CA 581227
(43) Date de publication de la demande: 06.06.1990
(73) Titulaire: RHONE-POULENC CHIMIE, 92408 Courbevoie Cédex (FR)
(72) Inventeur: Turcotte, Gilles René, Kingston Ontario K7M 2W2 (CA); Finlayson, Sherri Alison, Kingston Ontario K7M 2Y8 (CA)
(74) Mandataire: Esson, Jean-Pierre

(56) Documents cités:
- EP-A- 0 046 437
- EP-A- 0 068 541
- EP-A- 0 167 414
- EP-A- 0 199 905
- EP-A- 0 234 319
- FR-A- 2 599 989
- US-A- 3 971 843
- US-A- 3 988 151
- US-A- 4 409 189
- PATENT ABSTRACTS OF JAPAN, vol. 9, no. 247 (C-307)[1970], 3 octobre 1985;& JP-A-60 103 029 (UNITIKA K.K.) 07-06-1985
- CHEMICAL ABSTRACTS, vol. 107, no. 20, novembre 1987, page 202, résumé no.179404n, Columbus, Ohio, US; MINAGAWA et al.: "Recovery of gallium from aqueoussodium aluminate solution", & JP-A-62 143 824 (MITSUBISHICHEMICAL INDUSTRIES CO., LTD.) 27-06-1987
- HYDROMETALLURGY, vol. 5, nos. 2,3, février 1980, pages 149-160, ElsevierScientific Publishing Co., Amsterdam, NL; G. COTE et al.: "Liquid-liquid extraction of germanium with oxidine derivates"

## Description

La présente invention concerne la récupération de gallium contenu dans des solutions aqueuses, par extraction liquide-liquide et liquide-solide.

Il est bien connu, grâce par exemple à Helgorsky et al., brevet US-A-3 971 843, que l'on peut extraire le gallium de solutions aqueuses basiques, telles que les solutions d'aluminate de sodium du procédé Bayer, en recourant à l'extraction par solvant à l'aide de 8-hydroxyquinoléine substituée, dissoute dans une solution organique. La méthode usuelle de réextraction du gallium contenu dans la solution organique consiste à le mettre en contact avec une solution aqueuse d'un acide minéral, tels que l'acide chlorhydrique, l'acide sulfurique ou l'acide nitrique. Vue sous l'angle du procédé, la réextraction à l'aide d'un acide soulève quelques problèmes :
a) il est nécessaire d'avoir une concentration en acide à équilibre élevé pour réextraire dans des conditions favorables le gallium contenu dans la phase organique, ce qui conduit soit à une consommation importante d'acide soit à la nécessité de prévoir des étapes de récupération de l'acide.
b) Ceci est dû à la protonation de la 8- hydroxyquinoiéine substituée lorsqu'elle est mise en contact avec des solutions d'acides forts, ce qui accroît la consommation d'acide ou exige des étapes supplémentaires de récupération de l'acide.
c) Quand on extrait directement le gallium contenu dans la lessive de Bayer, tout acide mélangé à la liqueur de Bayer provoque la formation de sels préjudiciables au procédé Bayer, ce qui rend le procédé d'extraction du gallium moins compatible avec l'unité Bayer sur laquelle est prélevée la lessive.

La demande de brevet européen EP-A-0 234 319, publiée le 2 septembre 1987, suggère la possibilité de réextraire le gallium contenu dans la solution organique en la mettant en contact avec une base forte, mais ne donne aucun exemple. Elle suggère, en outre, une concentration de 5 à 10 mole par litre.

L'objet de la présente invention consiste, pour résoudre les problèmes précités, à supprimer la nécessité de recourir à une extraction par acide et à rendre ainsi le procédé de récupération du métal davantage compatible avec le procédé Bayer et les solutions utilisées dans une usine d'hydrométallurgie.

### Description

Selon la présente invention, on a découvert de façon inattendue que l'on peut effectivement réextraire le Gallium contenu dans un complexant organique en le mettant en contact avec une solution aqueuse concentrée d'hydroxyde plutôt qu'avec une solution acide. C'est ainsi que la présente invention, sous son aspect le plus large, concerne un procédé de récupération du Gallium contenu dans une solution aqueuse par extraction dont les étapes comprennent (i) à mettre en contact la solution aqueuse avec une phase organique non miscible à l'eau contenant une 8-hydroxyquinoléine substituée insoluble dans l'eau, le gallium étant transféré dans la phase organique, (ii) à séparer la phase organique de la solution aqueuse, (iii) à récupérer le gallium à partir de la phase organique par mise en contact de celle-ci avec une solution aqueuse concentrée d'une base, le gallium passant de la phase organique dans la phase aqueuse et la phase contenant le gallium récupéré ayant une concentration en hydroxyde total d'au moins 4,6 mole par litre, (iv) à séparer la phase aqueuse de la phase organique, et enfin (vi) à recycler la phase organique ainsi obtenue à l'étape (i), procédé caractérisé en ce que la phase organique issue de l'étape (iv) est d'abord lavée avec une solution faiblement basique avant d'être recyclée à l'étape (i).

Dans le présent document, on entend par "hydroxyde total" la somme de l'hydroxyde libre et de l'hydroxyde combiné lié à des ions tels que Al(OH)₄⁻, Ga(OH)₄⁻, Zn(OH)₃⁻, etc.

Pour que la récupération du Gallium contenu dans la phase organique soit plus efficace, il est préférable d'ajuster la concentration en hydroxyde total de façon à ce que la solution aqueuse contenant le Gallium récupéré ait une concentration d'au moins 7,5 mole par litre d' hydroxyde total. Il est préférable aussi de mettre la phase organique contenant le Gallium en contact avec une solution de base forte contenant au moins 10 mole par litre, et au plus 19,3 mole, d'hydroxyde total. La base forte est de préférence NaOH ou KOH.

Il est préférable, en outre, d'effectuer l'extraction préliminaire à partir des solutions aqueuses (lessive Bayer) ainsi que la récupération des valeurs métalliques contenues dans la phase organique en évitant au maximum toute exposition à l'air ou à toute autre oxydation au moyen d'un mélangeur décanteur suffisamment étanche aux gaz pour empêcher ou réduire considérablement toute entrée de gaz. Le décanteur décrit dans la demande de brevet français FR-A-2 599 989, publié le 18 décembre 1987 convient particulièrement à cet effet. Il est également possible de réaliser ces extractions sous atmosphère non oxydante telle que sous atmosphère interte.
Le procédé selon la présente invention permet aussi de récupérer une grande variété de valeurs métalliques, à savoir Na, Ga, Al, Zn et Ge, à partir de solutions aqueuses. Les solutions aqueuses peuvent être acides ou basiques. L'agent d'extraction est de préférence une 8- hydroxyquinoléine comportant une chaîne latérale saturée ou insaturée. Parmi les agents d'extraction préférentiels, on peut citer le LIX-26® de Henkel Corporation et les KELEX 100®, KELEX 108® de Schering AG.

Avec le procédé selon la présente invention on peut réextraire le Gallium contenu dans une phase organique se présentant soit sous la forme d'une solution organique, soit sous la forme d'une phase organique immobilisée sur un support solide, telle qu'une résine ou du charbon actif.

Lorsque la phase organique et les phases aqueuses sont en contact, le gallium est transféré entre les phases par échange d'ions, à savoir

Ga(OH)₄⁻ aq + 3HXorg <---------> GaX₃ org + OHaq + 3H₂Oaq,

HX représentant la 8-hydroxyquinoléine substituée. Selon l'équation chimique précédente, les faibles concentrations en hydroxyde de la solution aqueuse favorisent le transfert du gallium vers la phase organique alors que les concentrations élevées en hydroxyde favorisent le transfert vers la solution aqueuse.

Il est avantageux de recycler la phase organique à partir de laquelle on a extrait le gallium à l'aide d'une solution fortement basique, au niveau de l'étape de récupération du gallium à partir de la solution d'aluminate de sodium. Avant de procéder à ce recyclage, on lave la phase organique avec une solution faiblement basique. Ce lavage permet d'éliminer les impuretés ou les composés qui se sont formés durant le cycle d'extraction et, par conséquent, de neutraliser la solution organique.

Ce lavage améliore l'extraction du gallium au niveau de l'étape de récupération du gallium à partir de la solution d'aluminate de sodium.

Etant donné que pour récupérer les valeurs métalliques, tel que le gallium, contenues dans une solution aqueuse, on procède habituellement dans l'industrie, à une électrolyse à partir d'une solution basique, on peut mettre en oeuvre le procédé d'extraction selon la présente invention de façon à permettre l'électrolyse directe de la solution de réextraction destinée à la récupération du gallium métallique. Ensuite, on peut ajuster le pH de l'électrolyte utilisé et le recycler en partie afin de réextraire les valeurs de gallium contenues dans la phase organique dans le cadre du procédé d'extraction liquide-liquide ou liquide-solide.

Dans une autre réalisation, on dilue l'électrolyte utilisé en vue de réduire la concentration en hydroxyde et on le met en contact avec la phase organique contenant les valeurs métalliques avant de réextraire le gallium avec une solution fortement basique.

On récupère ainsi une grande partie des valeurs résiduelles de gallium contenues dans l'électrolyte utilisé et on augmente la concentration en gallium de la phase organique et de la phase aqueuse soumise à l'électrolyse.

On dilue suffisamment l'électrolyte utilisé afin d'obtenir une faible concentration en hydroxyde qui favorise le transfert du gallium vers la phase organique.

Les exemples spécifiques ci-après sont destinés à illustrer la présente invention et ses avantages ainsi que la technique selon le préambule de la revendication principale. Il est bien entendu que lesdits exemples n'ont qu'une valeur d'illustration et ne sont aucunement limitatifs. Dans les exemples, l'agent d'extraction mis en oeuvre est le LIX-26® qui est un produit du commerce composé d'environ 72 % en poids d'un mélange de 8-hydroxyquinoléines substituées insaturées. La solution organique contient également de l'isodécanol et de l'Isopar-M (diluant du type kérosène). Dans certains cas, la solution organique contient aussi des impuretés non identifiées provenant d'utilisations antérieures de la solution organique.

### Exemple 1 selon l'art antérieur

On met en contact 225 ml de solution organique à environ 5 % en volume de LIX-26 (contenant des impuretés provenant d'utilisations antérieures de la solution organique) avec 900 ml de solution d'aluminate de sodium provenant du procédé Bayer. La solution a une teneur en sodium et en aluminium de l'ordre de 110 g/l de Na et de 25 g/l d'Al. Durant le contact avec la phase organique, la teneur en gallium de la solution d'aluminate de sodium passe de 147 ppm à 84 ppm. On sépare les phases et, ensuite, on met en contact 70 ml de solution organique contenant le gallium avec 70 ml de solutions aqueuses contenant respectivement 7,5, 10 et 12,5 mole par litre d'hydroxyde total sous forme de NaOH. L'analyse des solutions caustiques après la mise en contact donne respectivement 231 ppm, 264 ppm et 267 ppm, ce qui montre que la réextraction est presque complète à 100 %.

### Exemple 2 selon l'art antérieur

On met en contact 350 ml de solution organique à environ 6 % en volume de LIX-26 et 1 400 ml de solution d'aluminate de sodium provenant du procédé Bayer. La teneur en sodium et en aluminium de la solution est de l'ordre de 100 g/l de Na et de 24 g/l d'Al. Durant le contact avec la phase organique, la teneur en gallium de la solution d' aluminate de sodium passe de 135 ppm à 77 ppm. Après avoir séparé les phases, on met en contact 300 ml de solution organique contenant le gallium et 10 ml de solution aqueuse contenant 10 mole par litre d'hydroxyde total sous forme de NaOH. L'analyse de la solution caustique après la mise en contact avec la solution organique donne une teneur en gallium de 4 840 ppm, ce qui démontre que l'on peut obtenir une solution fortement concentrée en gallium par réextraction avec une solution aqueuse concentrée de base.

### Exemple 3 selon l'art antérieur

On met en contact 13 litres de solution organique à environ 4 % en volume de LIX-26 (comportant des impuretés provenant d'utilisations antérieures de la solution organique) contenant environ 157 ppm de Ga, 260 ppm d'Al et 1,25 g/l de Na avec 520 ml de solution aqueuse contenant 10 mole par litre d'hydroxyde total sous forme de NaOH. L'analyse de la solution caustique après la mise en contact avec la solution organique donne une teneur en gallium de 2 490 ppm. On électrolyse 400 ml de ladite solution caustique. Pendant l'électrolyse, la teneur en gallium de la solution caustique passe de 2 940 ppm à 1 240 ppm, ce qui démontre que l'on peut récupérer directement le gallium métallique à partir d'une solution aqueuse concentrée de base mise en oeuvre dans la réextraction du gallium.

### Exemple 4 selon l'art antérieur

On met en contact 1 000 ml de solution organique à environ 2,45 % en volume de LIX-26 (comportant des impuretés provenant d'utilisations antérieures de la solution organique) ayant une teneur en aluminium et en sodium d'environ 625 ppm d'Al et 4,02 g/l de Na avec 4 ml de solution aqueuse contenant 10 mode par litres d'hydroxyde total. L'analyse de la solution caustique après la mise en contact avec la solution organique montre que la teneur en aluminium et en sodium est respectivement de 21,4 et de 115 g/l. La teneur de la solution caustique en hydroxyde total après la mise en contact avec la solution organique est de 4,6 mode par litres. Le présent exemple montre que l'on peut réextraire des valeurs métalliques avec une solution aqueuse de base forte et que la solution aqueuse contenant le métal récupéré peut avoir une concentration d'au moins 4,6 mode par litre d'hydroxyde total.

### Exemple 5 selon l'art antérieur

On met en contact 75 ml de solution organique à environ 2,45 % en volume de LIX-26 (comportant des impuretés provenant d'utilisations antérieures de la solution organique) contenant environ 77 ppm de Ga, 625 ppm d'Al et 4,02 g/l de Na avec 75 ml de solutions aqueuses d'hydroxyde de sodium et d'hydroxyde de potassium contenant respectivement 12 mole par litre d'hydroxyde total. L'analyse de ces solutions caustiques après la mise en contact avec la solution organique montre que leur teneur en gallium est respectivement de 78 et de 79 ppm, ce qui prouve que la réextraction du gallium contenu dans la solution organique avec une base forte n'est pas limitée à une base spécifique.

### Exemple 6 selon l'art antérieur

On met en contact 750 ml de solution organique à environ 2,45 % en volume de LIX-26 (comportant des impuretés provenant d'utilisations antérieures de la solution organique) contenant environ 77 ppm de Ga, 625 ppm d'Al et 4,02 g/l de Na avec 5ml de solutions aqueuses d'hydroxyde de sodium contenant respectivement 12,50, 16,25 et 19,3 mole par litre d'hydroxyde total. L'analyse de cette solution caustique après la mise en contact avec la solution organique montre que leur teneur en gallium est respectivement de 22,67 g/l, 23,75 g/l et de 24,91 g/l. Cet exemple fait la preuve que l'on peut réextraire des valeurs métalliques contenues dans la solution organique avec une solution aqueuse de base forte et que l'on peut augmenter la concentration en valeurs métalliques réextraites en augmentant la concentration en hydroxyde total de la solution de réextraction.

### Exemple 7 selon l'art antérieur

On met en contact 100 ml de solution organique à environ 6 % en volume de LIX-26 et 100 ml de solution aqueuse ayant un pH de l'ordre de 2,0. La teneur en gallium et en sodium de la solution aqueuse est respectivement de l'ordre de 467 ppm de Ga et de 710 ppm de Ma. Durant le contact avec la solution organique, la teneur en gallium de la solution aqueuse passe de 467 à 0,5 ppm. Après avoir séparé les phases, on met en contact 50 ml de solution organique contenant le gallium avec 50 ml de solution aqueuse contenant 10 mole par litre d'hydroxyde total.

L'analyse de la solution caustique après la mise en contact avec la solution organique donne une teneur en gallium de 532 ppm et montre que les valeurs de gallium contenues dans une solution aqueuse acide peut être extraite par la solution organique et que les mêmes valeurs de gallium contenues dans la solution organique peuvent être réextraites de la solution organique avec une solution aqueuse de base forte.

### Exemple 8 selon l'art antérieur

On met en contact 350 ml de solution organique à environ 6 % en volume de KELEX 100 et 350 ml de solution aqueuse contenant environ 140 g/l d'hydroxyde de sodium et 1 g/l de gallium. Durant le contact avec la solution organique, la teneur en gallium de la solution aqueuse passe de 1g/l à 93 ppm. Après avoir séparé les phases, on met en contact 300 ml de solution organique contenant le gallium avec 15 ml de solution aqueuse contenant 12,5 mole par litre d'hydroxyde total.

L'analyse de la solution caustique après la mise en contact avec la solution organique donne une teneur en gallium de 17,8 g/l et montre que l'on peut obtenir une solution à forte concentration en gallium par réextraction d'une 8-hydroxyquinoléine autre que le LIX- 26 avec une solution aqueuse de base forte.

### Exemple 9 selon l'art antérieur

On met en contact 50 ml de solution organique contenant environ 6 % en volume de LIX-26 et 50 ml de solutions aqueuses contenant respectivement environ 2 470 ppm de Zn et 2 497 ppm de Ge.

Le pH de la solution aqueuse est d'environ 3,75. Durant le contact avec les solutions organiques, la teneur en zinc de la solution aqueuse passe de 2 470 à 2 378 ppm et la teneur en germanium de la solution aqueuse de 2 497 à 2 048 ppm.

Après avoir séparé les phases, on met en contact 30 ml de solution organique contenant le zinc et le germanium avec 30 ml de solution aqueuse contenant 10 mole par litre d'hydroxyde total.

Les analyses desdites solutions caustiques après la mise en contact avec les solutions organiques donnent une teneur en zinc de 23 ppm et une teneur en germanium de 455 ppm.

Leprésent exemple montre que l'on peut extraire les valeurs métalliques contenues dans les solutions aqueuses acides avec la solution organique et que l'on peut réextraire ces mêmes valeurs métalliques contenues dans la solution organique à partir de ladite solution organique avec une solution aqueuse de base forte d'au moins 10 mole par litre d'hydroxyde total.

### Exemple 10 selon l'art antérieur

On met en contact 800 ml de solution organique à environ 10 % en volume de LIX-26 avec 800 ml de solution aqueuse contenant environ 11,1 g/l de gallium et 140 g/l d'hydroxyde de sodium. Pendant le contact avec la solution organique, la teneur en gallium de la solution aqueuse passe de 11,1 g/l à 7,4 g/l. Après avoir séparé les phases, on met en contact 750 ml de solution organique contenant le gallium avec 5 ml de solution aqueuse contenant 10 mole par litre d'hydroxyde total sous forme de NaOH.

L'analyse de la solution caustique après la mise en contact avec la solution organique donne une teneur respective en gallium et en sodium de 70,89 g/l de Ga et de 112 g/l de Na. La teneur de la solution caustique en hydroxyde total après la mise en contact avec la solution organique est de 4,4 mole par litre.

Le présent exemple montre que l'on peut récupérer les valeurs de gallium contenues dans la solution organique avec une solution aqueuse concentrée de base et que la solution aqueuse contenant les valeurs de gallium récupérées peut avoir une concentration d'au moins 4,4 mole par litre d'hydroxyde total.

### Exemple 11 selon l'art antérieur

On met en contact 50 ml de solution organique à environ 5 % en volume de LIX-26 avec 50 ml de solution aqueuse contenant 10 mole par litre d'hydroxyde total pendant 72 heures à 55C.

On met en contact 25 ml de solution organique, (I) avant et (II) après le contact avec la solution contenant 10 mole par litre d'hydroxyde total, avec 75 ml de solution aqueuse contenant environ 1,09 g/l de gallium et 130 g/l d'hydroxyde de sodium. Durant le contact avec la solution organique (I), la teneur en gallium de la solution aqueuse passe de 1,09 g/l à 0,66 g/l et, durant le contact avec la solution organique (II), la teneur en gallium passe de 1,09 g/l à 0,81 g/l. La teneur en gallium et en sodium de la solution organique (I) est respectivement de 1,24 g/l de Ga et de 1,21 g/l de Na et celle de la solution organique (II) de 0,85 g/l de Ga et de 1,63 g/l de Na.

Cet exemple montre que le contact de la solution organique avec une solution aqueuse fortement basique diminue les performances de l'extraction du gallium.

### Exemple 12 selon l'invention

On met en contact une solution organique à environ 4,6 % de LIX-26 (contenant des impuretés provenant d'utilisations antérieures de la solution organique) avec 600 ml de solution aqueuse contenant 0,175 mole par litre d'hydroxyde total pendant une heure à 45°C. Successivement, on met la solution organique en contact avec trois solutions aqueuses fraîches contenant 0,175 mole par litre d'hydroxyde total.

On met en contact 75 ml de solution organique, (I) avant et (II) après la mise en contact avec la solution contenant 0,175 mole par titre d'hydroxyde total avec 75 ml de solution d' aluminate de sodium provenant du procédé Bayer. La teneur en sodium et en aluminium est d'environ 105 g/l de Na et de 38 g/l d'Al. Pendant le contact avec la solution organique (I), la teneur en gallium de la solution d'aluminate de sodium passe de 100 ppm à 56 ppm et, durant le contact avec la solution organique (II), la teneur en gallium passe de 100 ppm à 51 ppm. La teneur en gallium, aluminium et sodium de la solution organique (I) est de 43 ppm de Ga, de 410 ppm d'Al et de 6,38 g/l de Na, celle de la solution organique (II) de 49 ppm de Ga, de 350 ppm d'Al et de 4,07 g/l de Na.

Cet exemple montre que le contact de la solution organique avec des solutions aqueuses faiblement basiques améliore les performances de l'extraction du gallium.

### Exemple 13 selon l'art antérieur

On a vérifié la présente invention en mettant en oeuvre des solutions organiques contenant du LIX-26 qui est un agent d'extraction du commerce constitué à environ 72 % en volume d'un mélange de 8-hydroxyquinoléines substituées insaturées. Les solutions organiques contiennent également de l'isodécanol, de l'Isopar-M (diluant du type kérosène). Dans certains cas, la solution organique contient aussi des impuretés non identifiées provenant d'utilisations antérieures de la solution organique.

On met en contact 555 ml de solution organique à environ 4,6 % en volume de LIX-26 (contenant des impuretés provenant d'utilisations antérieures de la solution organique) ayant une teneur en gallium, aluminium et sodium de l'ordre de 50 ppm de Ga, 530 ppm d'Al et 7,7 g/l de Na avec 69 ml d'électrolyte utilisé dilué. Pendant le contact avec la phase organique, la teneur en gallium, aluminium et sodium de l'électrolyte utilisé dilué passe respectivement de 1 083 ppm de Ga, 3,6 g/l d'Al et 49,45 g/l de Na à 41 ppm de Ga, 7,26 g/l d'Al et 64,84 g/l de Na. L'analyse de la solution organique après la mise en contact avec l'électrolyte utilisé dilué donne une teneur en galllium de 176 ppm.

Cet exemple montre que l'extraction par solvant permet de récupérer le gallium contenu dans l'électrolyte utilisé dilué et que la concentration en gallium de la phase organique a augmenté.

## Revendications

1. Procédé de récupération du gallium contenu dans une solution aqueuse dont les étapes consistent (i) à mettre en contact la solution aqueuse avec une phase organique non miscible à l'eau contenant une 8-hydroxyquinoléine substituée insoluble dans l'eau, le gallium étant transféré dans la phase organique, (ii) à séparer la phase organique de la solution aqueuse, (iii) à récupérer le gallium à partir de la phase organique par mise en contact de celle-ci avec une solution aqueuse concentrée d'une base, le gallium passant de la phase organique dans la phase aqueuse et la phase contenant le gallium récupéré ayant une concentration en hydroxyde total d'au moins 4,6 mole par litre, (iv) à séparer la phase aqueuse de la phase organique, et enfin (vi) à recycler la phase organique ainsi obtenue à l'étape (i), procédé caractérisé en ce que la phase organique issue de l'étape (iv) est d'abord lavée avec une solution faiblement basique avant d'être recyclée à l'étape (i).

2. Procédé selon la revendication 1 dans lequel la phase organique contenant le gallium récupéré a une concentration en hydroxyde total d'au moins 7,5 mole par litre.

3. Procédé selon la revendication 1 ou 2 dans lequel la phase organique contenant le gallium est mise en contact avec une solution aqueuse concentrée d'une base contenant au moins 10 mole par litre d'hydroxyde total.

4. Procédé selon la revendication 1, 2 ou 3 dans lequel la solution aqueuse est une solution d'aluminate de sodium provenant de la production d'alumine selon le procédé Bayer.

5. Procédé selon la revendication 1 dans lequel le gallium est récupéré à partir d'une phase organique sous forme d'une solution organique.

6. Procédé selon la revendication 1 dans lequel le gallium est récupéré à partir d'une phase organique immobilisée sur un support solide.

7. Procédé selon l'une des revendications précédentes dans lequel le gallium est récupéré et séparé sous forme de gallium métal par électrolyse de la phase aqueuse contenant ledit gallium.

8. Procédé selon la revendication 7 dans lequel, avant de récupérer le gallium par mise en contact de la phase organique avec une solution aqueuse concentrée d'une base, on met ladite phase organique en contact avec l'électrolyte, préalablement dilué, utilisé dans l'étape d'électrolyse.

## Claims

1. A process for recovery of the gallium contained in an aqueous solution, the steps of which comprise (i) bringing the aqueous solution into contact with a water-immiscible organic phase containing a water-insoluble substituted 8-hydroxyquinoline, the gallium being transferred into the organic phase, (ii) separating the organic phase from the aqueous solution, (iii) recovering the gallium from the organic phase by bringing same into contact with a concentrated aqueous solution of a base, the gallium passing from the organic phase into the aqueous phase and the phase containing the gallium recovered having a total hydroxide concentration of at least 4.6 moles per litre, (iv) separating the aqueous phase from the organic phase, and finally (vi) recycling the organic phase obtained in that way to step (i), the process being characterised in that the organic phase coming from step (iv) is first washed with a weakly basic solution before being recycled to step (i).

2. A process according to claim 1 wherein the organic phase containing the gallium recovered has a total hydroxide concentration of at least 7.5 moles per litre.

3. A process according to claim 1 or claim 2 wherein the organic phase containing the gallium is brought into contact with a concentrated aqeous solution of a base containing at least 10 moles per litre of total hydroxide.

4. A process according to claim 1, claim 2 or claim 3 wherein the aqueous solution is a solution of sodium aluminate resulting from the production of alumina using the Bayer process.

5. A process according to claim 1 wherein the gallium is recovered from an organic phase in the form of an organic solution.

6. A process according to claim 1 wherein the gallium is recovered from an organic phase which is immobilised on a solid carrier.

7. A process according to one of the preceding claims wherein the gallium is recovered and separated in the form of gallium metal by electrolysis of the aqueous phase containing said gallium

8. A process according to claim 7 wherein, before recovery of the gallium by the organic phase being brought into contact with a concentrated aqueous solution of a base, said organic phase is brought into contact with the previously diluted electrolyte which is used in the electrolysis step.

## Patentansprüche

1. Verfahren zur Rückgewinnung von in einer wäßrigen Lösung enthaltenem Gallium, bei dem die Stufen bestehen aus:
(i) In-Kontakt-Bringen der wäßrigen Lösung mit einer organischen, mit Wasser nicht mischbaren Phase, die ein in Wasser unlösliches, substituiertes 8-Hydroxychinolin enthält, wobei das Gallium in die organische Phase überführt wird,
(ii) Trennung der organischen Phase von der wäßrigen Lösung,
(iii) Rückgewinnung des Galliums aus der organischen Phase durch deren In-Kontakt-Bringen mit einer konzentrierten wäßrigen Lösung einer Base, wobei das Gallium von der organischen Phase in die wäßrige Phase übergeht und die Phase, die das zurückgewonnene Gallium enthält, eine Konzentration an Gesamthydroxid von mindestens 4,6 Mol pro Liter aufweist,
(iv) Trennung der wäßrigen Phase von der organischen Phase, und schließlich
(vi) Rückführung der auf diese Weise erhaltenen organischen Phase in die Stufe (i),
dadurch gekennzeichnet, daß die aus der Stufe (iv) stammende organische Phase zunächst mit einer schwach basischen Lösung gewaschen wird, bevor man sie in die Stufe (i) zurückführt.

2. Verfahren nach Anspruch 1, bei dem die organische Phase, die das zurückgewonnene Gallium enthält, eine Konzentration an Gesamthydroxid von mindestens 7,5 Mol pro Liter aufweist.

3. Verfahren nach Anspruch 1 oder 2, bei dem die organische Phase, die das Gallium enthält, mit einer konzentrierten wäßrigen Lösung einer Base in Kontakt gebracht wird, die mindestens 10 Mol pro Liter Gesamthydroxid enthält.

4. Verfahren nach Anspruch 1, 2 oder 3, bei dem die wäßrige Lösung eine Lösung von Natriumaluminat ist, die aus der Produktion von Tonerde nach dem Bayer-Verfahren stammt.

5. Verfahren nach Anspruch 1, bei dem das Gallium ausgehend von einer organischen Phase in Form einer organischen Lösung zurückgewonnen wird.

6. Verfahren nach Anspruch 1, bei dem das Gallium ausgehend von einer organischen Phase zurückgewonnen wird, die auf einem festen Träger immobilisiert ist.

7. Verfahren nach einem der vorstehenden Ansprüche, bei dem das Gallium zurückgewonnen und in Form von metallischem Gallium durch Elektrolyse der das genannte Gallium enthaltenden wäßrigen Phase abgetrennt wird.

8. Verfahren nach Anspruch 7, bei dem man vor der Rückgewinnung des Galliums durch In-Kontakt-Bringen der organischen Phase mit einer konzentrierten wäßrigen Lösung einer Base die genannte organische Phase mit dem zuvor verdünnten Elektrolyten in Kontakt bringt, der in der Elektrolyse-Stufe verwendet wird.
